# EUROPÄISCHE PATENTSCHRIFT

(11) **EP 4 785 213 B1**
(45) Veröffentlichungstag und Bekanntmachung des Hinweises auf die Patenterteilung: **25.11.2026**
(21) Anmeldenummer: 25718348.3
(22) Anmeldetag: 08.04.2025
(51) Int. Cl.: G06N 3/02

(54) **VERFAHREN ZUR ERZEUGUNG EINES STEUERPROGRAMMS EINER SPEICHERPROGRAMMIERBAREN STEUERUNG UND AUTOMATISIERUNGSSYSTEM**
METHOD FOR GENERATING A CONTROL PROGRAM FOR A PROGRAMMABLE LOGIC CONTROLLER, AND AUTOMATION SYSTEM
PROCÉDÉ DE GÉNÉRATION D'UN PROGRAMME DE COMMANDE POUR UN CONTRÔLEUR LOGIQUE PROGRAMMABLE ET SYSTÈME D'AUTOMATISATION

(30) Priorität: 19.04.2024 DE 102024110997
(43) Veröffentlichungstag der Anmeldung: 05.08.2026
(73) Patentinhaber: Beckhoff Automation GmbH, 33415 Verl (DE)
(72) Erfinder: TAORE, Aryaman, Auckland, 2014 (NZ); BAUSE, Fabian, 33129 Delbrück (DE); LIENEN, Julian, 33129 Delbrück (DE); SCHULZE EVERDING, Johannes, 48324 Sendenhorst (DE); MOHAMED, Mahmoud, 33100 Paderborn (DE)
(74) Vertreter: Patentanwaltskanzlei WILHELM & BECK
(86) Internationale Anmeldenummer: PCT/EP2025/059637
(87) Internationale Veröffentlichungsnummer: WO 2025/219164

(56) Entgegenhaltungen:
- WO-A1-2022/240398
- US-A1- 2023 324 856
- RHEA SANJAY SUKTHANKER ET AL: "Multi-objective Differentiable Neural Architecture Search", ARXIV.ORG, CORNELL UNIVERSITY LIBRARY, 201 OLIN LIBRARY CORNELL UNIVERSITY ITHACA, NY 14853, 28 February 2024 (2024-02-28), XP091689387

## Beschreibung

Die vorliegende Erfindung betrifft ein Verfahren zur Erzeugung eines Steuerprogramms einer speicherprogrammierbaren Steuerung (SPS) in einem Automatisierungssystem. Die Erfindung betrifft weiter ein Verfahren zum Betreiben eines Automatisierungssystems und ein Automatisierungssystem.

Die Patentanmeldung beansprucht die Priorität der deutschen Patentanmeldung 10 2024 110 997.1

Maschinen oder Anlagen eines Automatisierungssystems werden häufig mithilfe speicherprogrammierbarer Steuerungen (SPS) gesteuert. Die SPS kann dabei als externes Gerät oder als Software-SPS vorliegen. Zur Steuerung oder Regelung der Aktoren und Sensoren der Maschine oder der Anlage nutzt die SPS meist eine Kommunikationsschnittstelle in Form eines Feldbussystems. Die Aktoren und Sensoren der Maschine oder der Anlage können dann über das Feldbussystem miteinander vernetzt sein. Durch das Auslesen der Messdaten der Sensoren und/oder der aktuellen Ist-Daten der Aktoren, die mit den Eingängen der speicherprogrammierbaren Steuerung verbunden sind, erhält die SPS eine Information über den Status der Maschine oder der Anlage. Die Aktoren sind an die Ausgänge der speicherprogrammierbaren Steuerung angeschlossen und ermöglichen die Steuerung der Maschine oder der Anlage. Zur dynamischen Ansteuerung der Aktoren generiert die SPS auf Basis der Ist-Daten und/oder auf Basis der Messdaten der Sensoren die Ausgabedaten für die Aktoren, wobei sich die genannten Daten um einzelne Werte oder Wertegruppen handeln können. Ebenso kann die Ansteuerung der Aktoren aufgrund von Vorgaben, zum Beispiel anhand von Bewegungsprofilen erfolgen.

Um die gewünschte Betriebsweise der Maschine bzw. der Anlage bereitstellen zu können, legt die Steuerungsaufgabe der SPS fest, welche seitens der SPS, in Abhängigkeit von entsprechenden Eingangsdaten, erzeugte Ausgangsdaten den Aktoren zugeführt werden. Die Verarbeitung der Daten durch die SPS erfolgt meist zyklisch und umfasst drei Schritte: Bereitstellen von aktuellen Eingabedaten (beispielsweise Ist-Daten der Aktoren und/oder Messdaten der Sensoren), Verarbeitung der Eingabedaten zu Ausgabedaten, und Ausgabe der Ausgabedaten für die Bewegungssteuerung (beispielsweise Zielpositionen, etc.).

Industrielle SPS stellen deterministische Echtzeitsysteme dar. Unter Determinismus ist hierbei die Anforderung zu verstehen, dass ein Ereignis beziehungsweise eine Berechnung ihren Abschluss innerhalb eines fest definierten Zeitintervalls findet. Diese Zeitintervalle werden dabei durch die konkreten Anwendungen des jeweiligen Automatisierungssystems definiert. Für die speicherprogrammierbare Steuerung wird in der Regel eine harte Echtzeitfähigkeit gefordert, was bedeutet, dass Deadlines konsequent eingehalten und niemals überschritten werden dürfen. Zusätzlich muss zum Zeitpunkt der Deadline ein valides Ergebnis für die Aktoren vorliegen. Dies ist vor allem dann relevant, wenn das Überschreiten der Deadline zu Personen- oder Sachschäden führen kann, beispielsweise wenn ein Roboterarm nicht rechtzeitig abgebremst wird.

In einigen Anwendungen von Automatisierungssystemen werden auch Algorithmen auf den korrespondierenden SPS ausgeführt, die auf künstlicher Intelligenz (KI) basieren und auch als KI-Modelle bezeichnet werden. Unter dem Begriff des Kl-Modells werden vorliegend in erster Linie neuronale Netze verstanden, der Begriff soll aber auch statistische Modelle umfassen, etwa lineare Modelle, Support Vector Machines, Entscheidungsbäume (engl: decision trees) oder Random Forests. KI kann die Effizienz der SPS vor allem im Bereich der Verarbeitung von Sensordaten, beispielsweise in der Bildverarbeitung, verbessern, oder bestimmte Funktionen erst ermöglichen.

Unter dem oben genannten Aspekt der Echtzeitfähigkeit der SPS ist es dabei notwendig, die verwendeten KI-Modelle in die Laufzeitumgebung der SPS zu integrieren, damit die Anforderungen sowohl an Latenz als auch an Determinismus erfüllt werden können. Eine Garantie der Operabilität eines gewählten Kl-Modells im Kontext der gegebenen deterministischen Umgebung und vor seiner Implementierung ist daher wünschenswert, im Stand der Technik jedoch nicht bekannt.

Aus der Druckschrift US 2023/324856 A1 ist eine Steuerung für ein technisches System basierend auf einer Recheneinheit für künstliche Intelligenz bekannt.

Es ist eine Aufgabe der Erfindung, ein alternatives oder ein verbessertes Verfahren zur Erzeugung eines Steuerprogramms einer speicherprogrammierbaren Steuerung (SPS) in einem Automatisierungssystem beziehungsweise zum Betreiben eines Automatisierungssystems anzugeben sowie ein entsprechendes Automatisierungssystem.

Die Aufgabe der Erfindung wird durch die unabhängigen Ansprüche gelöst. Vorteilhafte Weiterbildungen, zusätzliche Merkmale und/oder Vorteile der Erfindung ergeben sich aus den abhängigen Ansprüchen und der folgenden Beschreibung.

Es sei angemerkt, dass sämtliche im Zusammenhang mit dem offenbarten Verfahren genannten Merkmale auch Ausgestaltungen des offenbarten Automatisierungssystems sein können, und umgekehrt.

Zur Erzeugung eines Steuerprogramms einer speicherprogrammierbaren Steuerung in einem Automatisierungssystem auf der Grundlage einer Kl-Pipeline, die wenigstens ein KI-Modell mit optional einer Vorverarbeitung von Eingangsdaten und/oder einer Nachverarbeitung von Ausgabedaten enthält, werden folgende Schritte ausgeführt: Bereitstellen eines Latenzmodells zum Vorhersagen einer Rechenzeit für eine Ausführung einer Kl-Pipeline auf der Grundlage von Hardwarekonfigurationen und Softwarekonfigurationen und eines Kompatibilitätsmodells zum Abbilden von KI-Pipeline-Funktionen auf Softwarekonfigurationen; Erstellen eines Sets an Kl-Pipeline-Kandidaten auf der Grundlage des Kompatibilitätsmodells; Erfassen einer Hardwarekonfiguration und einer Softwarekonfiguration der speicherprogrammierbaren Steuerung; Auswählen einer KI-Pipeline aus dem Set an Kl-Pipeline-Kandidaten durch Auswerten einer Performance der Kl-Pipeline-Kandidaten nach einem Trainieren der Kl-Pipeline-Kandidaten unter Berücksichtigung einer Vorhersage einer Rechenzeit auf der Grundlage des Latenzmodells; Erstellen eines Quellcodes des Steuerprogramms mit der ausgewählte Kl-Pipeline zur Ausführung auf der speicherprogrammierbaren Steuerung in dem Automatisierungssystem.

Bei der Integration von Kl-Modellen oder Kl-Pipelines in die Steuerung ist entsprechend beim Modelltraining die Latenz des Modells bei gegebener Hardwarespezifikation zu berücksichtigen. Des Weiteren ist es notwendig, das KI-Modell in die Laufzeitumgebung der SPS zu integrieren, damit Anforderungen sowohl an Latenz als auch an Determinismus erfüllt werden können.

Das Latenzmodell kann dabei eine Latenz in Form eines numerischen Wertes bestimmen, der sich aus einer Summe der Laufzeiten der ausgeführten Kl-Pipeline-Funktionen ergibt. Kl-Pipeline-Funktionen sind in der Regel Operatoren oder Abfolgen von Operatoren.

Das Latenzmodell ist in der Lage, die Latenz von Kl-Pipelines vorherzusagen. Dabei werden im Latenzmodell zur Vorhersage der Ausführungszeit nicht nur die Hardwarekonfiguration, sondern auch die Softwarekonfiguration des Zielsystems berücksichtigt.

Mit dem Kompatibilitätsmodell kann eine Datenstruktur bereitgestellt werden, in der Kl-Pipeline-Funktionen äquivalente Funktionen in der Softwarekonfiguration zuordnet sind. Das Kompatibilitätsmodell stellt sicher, dass keine Kl-Pipeline-Kandidaten generiert werden, die auf einem konkreten Zielsystem nicht ausführbar sind.

Bei dem Auswählen und Trainieren von Kl-Modell-Kandidaten wird üblicherweise nicht geprüft, ob das Kl-Modell auf dem Zielsystem ausführbar ist. Es werden zwar Hardwarespezifikationen berücksichtigt. Allerdings ist das allein unzureichend, um eine tatsächliche Operabilität zu bescheinigen. Mit dem Kompatibilitätsmodell, das sowohl Hardwarekonfiguration als auch Softwarekonfiguration des Zielsystems berücksichtigt, wird die Operabilität inhärent garantiert.

Die garantierte Operabilität ermöglicht auch eine Automatisierung der Codegenerierung des Inferenzcodes. Da mit der KI-Pipeline auch Vor- und/ oder Nachverarbeitungsschritte optimiert werden, wird das Kl-Modell augmentiert.

Das Erstellen des Sets an KI-Pipeline-Kandidaten kann mithilfe wenigstens eines anwendungsspezifischen Trainingsdatensatzes erfolgen.

Dabei werden kombinatorische Möglichkeiten von Sequenzen von Operatoren betrachtet, wobei nur Operatoren verwendet werden, die nach dem Kompatibilitätsmodell mit dem Zielsystem kompatibel sind. Es ergibt sich ein Suchgraph mit verschiedenen möglichen Pfaden.

Die Kompatibilität der Kl-Pipeline-Kandidaten wird in diesem Schritt bereits gewährleistet. Bei der Generierung werden nicht nur verschiedene Kl-Modelle berücksichtigt, sondern auch Vor- und/ oder Nachbereitungsschritte. Auch hier stellt das Kompatibilitätsmodell die Ausführbarkeit der betrachteten Operatoren sicher.

Zum Erstellen des Sets an Kl-Pipeline-Kandidaten kann ein One-shot neural architecture search-Verfahren verwendet werden.

Beim Auswählen der KI-Pipeline kann aus dem Set an Kl-Pipeline-Kandidaten eine Generalisierungsfähigkeit der KI-Pipeline berücksichtigt werden.

Zum Auswählen der KI-Pipeline aus dem Set an Kl-Pipeline-Kandidaten kann ein Pareto-Optimalität-Verfahren verwendet werden.

Die ausgewählte KI-Pipeline kann mit einem Trainingsdatensatz nachtrainiert werden, um die Generalisierungsfähigkeit zu verbessern.

Wenn beim Auswählen der KI-Pipeline aus dem Set an KI-Pipeline-Kandidaten kein Pipeline-Kandidat eine vorgegebene Latenzanforderung erfüllt, kann eine Anpassung der Hardwarekonfiguration und/ oder der Software-Konfiguration ausgeführt werden.

Die Kl-Modelle für die Kl-Pipeline-Kandidaten können ausgewählt werden aus der Gruppe der neuronalen Netze, der statistischen Modelle, der Support Vector Machines, der Decision Trees, und/oder der Random Forests.

Zum Betreiben eines Automatisierungssystems wird weiter der Quellcode des Steuerprogramms auf die speicherprogrammierbare Steuerung aufgespielt. Dann kann das Steuerprogramm zum Ausführen einer Automatisierungsaufgabe ausgeführt werden. Ein Automatisierungssystem zur Ausführung einer Automatisierungsaufgabe kann so betrieben werden.

Die Erfindung ist im Folgenden anhand von Ausführungsbeispielen unter Bezugnahme auf die beigefügten schematischen und nicht maßstabsgetreuen Zeichnungen näher erläutert.

In den lediglich beispielhaften Figuren (Fig.) der Zeichnungen zeigen:
Fig. 1 schematisch eine Ausführungsform eines Automatisierungssystems;
Fig. 2 schematisch eine Ausführungsform eines Verfahrens zur Erzeugung eines Steuerprogramms einer speicherprogrammierbaren Steuerung des Automatisierungssystems;
Fig. 3 schematisch ein neuronales Netzwerkmodell;
Fig. 4 schematisch einen Suchgraph für einen KI-Pipeline-Kandidaten;
Fig. 5 schematisch einen Kl-Pipeline-Kandidaten;
Fig. 6 schematisch eine Performance verschiedener Kl-Pipeline-Kandidaten.

Er werden im Weiteren folgende Begriffsdefinitionen verwendet:
Kl-Pipeline: Besteht aus einem KI-Modell und einer optionalen Vorverarbeitung (engl. pre-processing) der Eingabedaten bzw. optionalen Nachverarbeitung (engl. post-processing) der Ausgabedaten.

Training: Optimierung eines Kl-Modells, bestehend aus einer Reihe von anpassbaren Parametern, das über ein geeignetes Verfahren die Parameterkombinationen feststellt, die für einen gegebenen Datensatz eine Kostenfunktion (engl. loss function) minimiert. Betrachtet werden dabei differenzierbare Kl-Modelle (üblicherweise künstliche neuronale Netze), die über Gradienten-Abstiegsverfahren (speziell Backpropagation) auf überwachten Trainingsdaten (Features und Labels) optimiert werden.

Latenz: Zeitverzögerung zwischen Anfrage einer Prädiktion an ein Modell und dem Erhalt der Prädiktion. Dies beinhaltet u. a. die Berechnung des Modells selbst, aber auch etwaige Overheads durch Kommunikation mit der Ausführungsumgebung, Speicherzugriffen und Kommunikation zwischen einzelnen Ausführungseinheiten.

Echtzeitfähigkeit: Anforderung, dass ein Ereignis bzw. eine Berechnung ihren Abschluss innerhalb eines fest definierten Zeitintervalls findet.

Operabilität: Ausführbarkeit eines Kl-Modells bzw. einer-Kl-Pipeline auf einem Zielsystem, die durch eine Abbildbarkeit aller Operatoren des Kl-Modells bzw. der Kl-Pipeline auf eine semantisch äquivalente Funktion auf dem Zielsystem definiert wird.

Kompatibilität: Wenn ein KI-Modell bzw. eine Kl-Pipeline auf einem Zielsystem operabel ist, dann sind das KI-Modell bzw. die Kl-Pipeline und Zielsystem miteinander kompatibel.

Generalisierungsfähigkeit: Fähigkeit eines Kl-Modells bzw. einer-Kl-Pipeline akkurate (also möglichst der Grundwahrheit entsprechende) Prädiktionen auf zuvor ungesehenen Daten zu machen. Wenn ein Kl-Modell auf Trainingsdaten trainieren ist, soll das KI-Modell möglichst fehlerfrei auch später in einer Anwendung auf neu generierten, zuvor ungesehenen Daten funktionieren, indem es grundlegende Konzepte erlernt hat, die generalisierend auf neue Daten angewandt werden können und die zugrundeliegenden Relationen zwischen Features und Labels wieder geben.

Im Folgenden wird schematisch der Aufbau und die Funktionsweise eines Automatisierungssystems mit einer speicherprogrammierbaren Steuerung (SPS) sowie ein Verfahren zur Erzeugung eines Steuerprogramms einer speicherprogrammierbaren Steuerung (SPS) in dem Automatisierungssystem und ein Verfahren zum Betreiben des Automatisierungssystems beschrieben. Dabei werden einander entsprechende Bezugszeichen für einander entsprechende Merkmale verwendet.

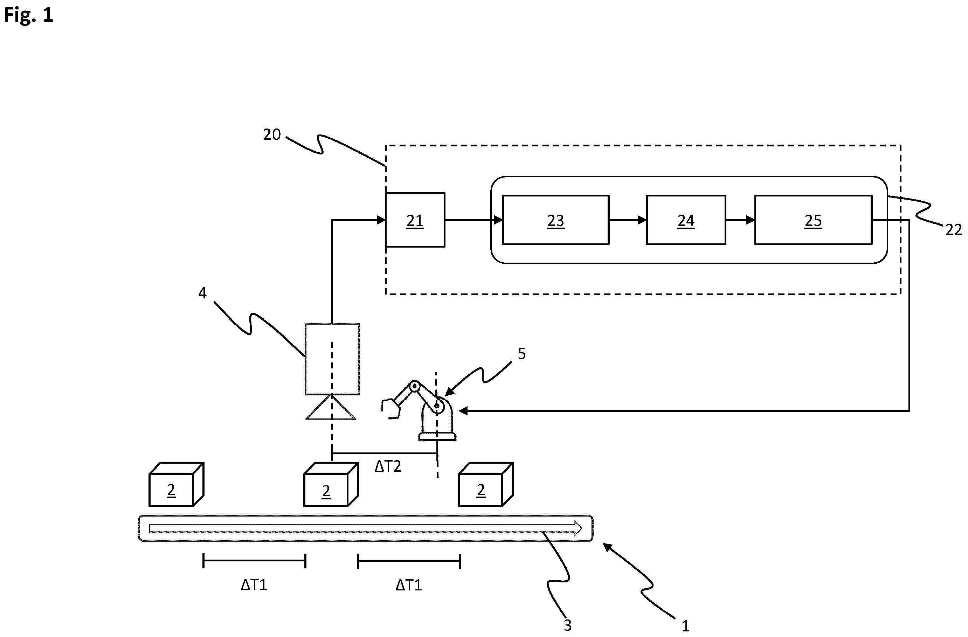

Figur 1 zeigt ein beispielhaftes Automatisierungssystem 10, das in der gezeigten Konfiguration ein Teil einer Verpackungsmaschine ist. Das Automatisierungssystem 10 umfasst ein Förderband 1, auf dem Verpackungseinheiten 2 in Richtung des Pfeils 3 transportiert werden, und eine speicherprogrammierbare Steuerung (SPS) 20, die im Weiteren zu beschreibende Prozesse im Automatisierungssystem 10 steuert. Auf der SPS 20 ist zu diesem Zweck ein Steuerprogramm installiert. Die SPS 20 wird technisch durch eine Hardwarekonfiguration und eine Softwarekonfiguration beschrieben.

Die Hardwarekonfiguration umfasst beispielsweise Komponenten wie Hauptplatine, Mikroprozessoren (CPU), Speichermodule (RAM), Graphikprozessoren (GPU), und so fort. Die Softwarekonfiguration der SPS 20 umfasst Informationen wie Typ und Version des verwendeten Betriebssystems, Typ und Version des Steuerprogramms, beispielsweise der Automatisierungssoftware TwinCAT, Spezifikationen zu benötigten und/oder verfügbaren Softwarebibliotheken zur Durchführung verschiedener Aufgaben der SPS 20, und weitere softwarespezifische Merkmale. Im Rahmen dieser Offenbarung wird im Zusammenhang mit der Erstellung eines Steuerprogramms für die SPS 20 die Spezifikation von Hard- und Software zusammen auch als Zielsystem bezeichnet.

Das Automatisierungssystem 10 umfasst ferner eine Sensorvorrichtung 4, die beispielsweise eine Kamera und/oder eine Waage umfasst, und eine Ausschleus-Station 5. Die Sensorvorrichtung 4 sowie die Ausschleus-Station 5 sind Teile einer Vorrichtung für eine Inspektion der Verpackungseinheiten 2. Durch die Inspektion wird geprüft, ob die einzelne erstellte Verpackungseinheit 2 bestimmten vorgegebenen Qualitätsanforderungen entspricht.

Für die Zwecke der vorliegenden Beschreibung wird angenommen, dass jede der Verpackungseinheiten 2 durch die Inspektion binär klassifiziert wird, das bedeutet, einer der Kategorien OK oder nicht OK zugeordnet wird, anhand von Kriterien wie beispielsweise visuell detektierbarer Beschädigungen, einzuhaltender Abmessungen, vorhandener beziehungsweise fehlender Etikettierungen, eines vorgeschriebenen Gewichts, etc. Wird festgestellt, dass eine Verpackungseinheit 2 nicht OK ist, wird sie an der Ausschleus-Station 5 aus der Anlage aussortiert, beispielsweise vom Förderband 1 entfernt, während die Verpackungseinheiten 2, die in die Kategorie OK fallen, auf dem Förderband 1 verbleiben und in nicht dargestellter Weise weiterbearbeitet werden. Die binäre Klassifikation dient hierbei nur als vereinfachtes Beispiel. Die Klassifikation könnte auch deutlich komplexer ausfallen und zum Beispiel eine große Anzahl verschiedene Qualitätsstufen aufweisen oder auch eine hierarchische Struktur mit Hauptklassen und Unterklassen umfassen.

Die Verpackungsmaschine verarbeitet je zwei Verpackungseinheiten 2 in einer bestimmten ersten Zeitdauer ΔT1, die in Figur 1 als Abstand zwischen den Verpackungseinheiten 2 angedeutet ist. Die erste Zeitdauer ΔT1 kann beispielsweise 200ms betragen. Eine maximal zulässige Entscheidungszeitdauer ΔT2, in welcher eine Entscheidung dahingehend getroffen werden muss, ob die einzelne Verpackungseinheit 2 OK oder nicht OK ist, hat einen Wert, der im Allgemeinen etwas kleiner ist als die erste Zeitdauer ΔT1 und unter anderem von dem baulichen Abstand zwischen der Sensorvorrichtung 4, beispielsweise der Kamera, und der Ausschleus-Station 5 abhängt. Die maximal zulässige Entscheidungszeitdauer ΔT2 kann beispielsweise 150ms betragen. Nach Ablauf der maximal zulässige Entscheidungszeitdauer ΔT2 muss das Ergebnis der Klassifizierung der einzelnen von der Kamera 4 erfassten Verpackungseinheit 2 gesichert in der SPS 20 vorliegen, damit die SPS 20 die Ausschleus-Station 5 entsprechend mit Steuerbefehlen versorgen kann.

Wie bereits eingangs erwähnt, handelt es sich bei der SPS 20 um ein deterministisches Echtzeitsystem. Die maximal zulässige Entscheidungszeitdauer ΔT2 definiert also ein Zeitintervall, das konsequent eingehalten werden muss und niemals überschritten werden darf, da ansonsten nachgeordnete Prozesse des kontinuierlich beziehungsweise quasi-kontinuierlich arbeitenden Automatisierungssystems 10 beeinträchtigt würden. Im Zusammenhang mit dem in Figur 1 gezeigten Beispiel wird ein Prozess zur Klassifikation der Verpackungseinheit 2, der das Ergebnis innerhalb der maximal zulässige Entscheidungszeitdauer ΔT2 gesichert bereitstellen kann, auch als echtzeitfähig bezeichnet.

Die Sensorvorrichtung 4 ist über eine geeignete Schnittstelle 21 mit der SPS 20 verbunden, die dazu eingerichtet ist, die von der Sensorvorrichtung 4 übermittelten Sensorsignale beziehungsweise -daten zu interpretieren. Interpretieren bedeutet in diesem Zusammenhang, anhand der Sensordaten die oben beschriebene Klassifizierung durchzuführen.

Dazu werden Methoden der künstlichen Intelligenz (KI) verwendet, die als Algorithmen beziehungsweise Softwaremodule oder -programme auf der SPS 20 implementiert und im Rahmen der vorliegenden Offenbarung auch als KI-Modelle bezeichnet werden. Mithilfe der KI-Modelle ist die SPS 20 in der Lage, Aufgaben wie die Klassifizierung der Verpackungseinheiten 2 derart durchzuführen, dass für die Aufgabe unwesentliche, zufällige Änderungen der Randbedingungen wie beispielsweise - bei einer optischen Inspektion - eine Änderung der Umgebungslichtbedingungen oder eine variable Orientierung einer Verpackungseinheit 2 auf dem Förderband 1 das Ergebnis der Klassifizierung nicht beeinflussen. Das von dem KI-Modell ausgegebene Ergebnis, sein Output, wird im Weiteren auch als Prädiktion bezeichnet.

Im Stand der Technik sind eine Vielzahl von Kl-Modellen bekannt, die jeweils auf unterschiedlichen mathematischen Modellen beruhen können (beispielsweise auf künstlichen neuronalen Netzen) und unterschiedliche Anforderungen an die Hardware- und/oder Softwarekonfiguration der SPS 20 stellen beziehungsweise mit bestimmten Hardware- und/oder Softwarekonfigurationen unterschiedliche Leistungen (Performance) erbringen, das heißt Prädiktionen unterschiedlich schnell und/oder unterschiedlich genau bereitstellen.

In seiner Funktion innerhalb der SPS 20 ist das Kl-Modell außerdem softwaremäßig eingebunden in eine sogenannte Kl-Pipeline, die in Figur 1 als Kl-Pipeline 22 gekennzeichnet ist. Die KI-Pipeline umfasst dabei das verwendete Kl-Modell sowie gegebenenfalls notwendige Vorverarbeitungsschritte (Pre-Processing) von Eingangsdaten und/oder Nachverarbeitungsschritte (Post-Processing) von Ausgabedaten. In der Ausführungsform in Fig. 1 umfasst die KI-Pipeline 22 das Kl-Modell 24 sowie einen Vorverarbeitungsschritt 23 der von der Sensorvorrichtung 4 bereitgestellten Sensordaten und einen Nachverarbeitungsschritt 25 des von dem KI-Modell 24 ausgegebenen Outputs.

Als Kl-Modell kommen primär neuronale Netze zum Einsatz. Das Kl-Modell kann aber auch ein anderes (klassisches) statistisches Modelle sein, etwa ein lineares Modell, Support Vector Machine, Decision Tree, Random Forest, etc.

Wenn die Klassifikation der Verpackungseinheiten 2 auf einer Bildauswertung beruht, kann das KI-Modell 24 als Bildklassifikator ausgeführt sein. Der Vorverarbeitungsschritt 23 kann dann beispielsweise sein, dass die von der Sensorvorrichtung 4 bereitgestellten Eingabebilder auf eine bestimmte Art und Weise vorverarbeitet werden. Bei dem Beispiel eines Bildklassifikators kann ein Vorverarbeitungsschritt beispielsweise ein Ändern der Bildgröße eines Eingabebildes (engl. resize image) oder Anpassen der Saturierung des Eingabebildes sein. Der Nachverarbeitungsschritt 24 kann dann beispielsweise sein, die Prädiktionen des Kl-Modells 24 in eine andere Repräsentation zu überführen. Bei dem Beispiel eines Bildklassifikators kann ein Nachverarbeitungsschritt beispielsweise die Auswahl der Klasse mit der höchsten Wahrscheinlichkeit oder die Bestimmung des Modalwertes der Wahrscheinlichkeitsverteilung nach der Ausgabe aus dem KI-Modell sein.

In Hinblick auf das Automatisierungssystem 10 und die Erstellung eines Steuerprogramms der SPS 20 besteht eine Herausforderung darin, die KI-Pipeline 22 für die jeweilige Aufgabe in dem Automatisierungssystem 10, im vorliegenden Beispiel für die Klassifizierung der Verpackungseinheiten 2, und für ein gegebenes Zielsystem der SPS 20 so auszuwählen und in die Laufzeitumgebung der SPS 20 zu integrieren, dass im Voraus eine Operabilitätsgarantie sowie eine Garantie der Echtzeitfähigkeit des Steuerprogramms gegeben werden kann.

Unter Operabilitätsgarantie wird hierbei verstanden, dass bereits vor der Integration einer Kl-Pipeline in eine SPS garantiert ist, dass das gewählte Kl-Modell durch das Zielsystem der SPS ausführbar ist.

Dabei ist es gewünscht, ein auf das jeweilige Automatisierungssystem beziehungsweise die konkrete SPS optimiertes Steuerprogramm zur Verfügung zu stellen.

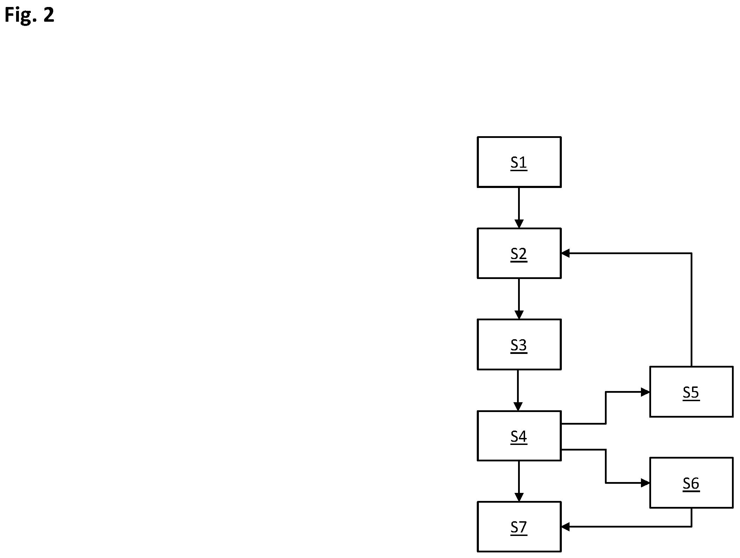

Das nachfolgend offenbarten Verfahren zur Erzeugung eines Steuerprogramms der SPS 20, das schematisch in Figur 2 dargestellt ist, wird zumindest teilweise als computerimplementiertes Verfahren auf dem Automatisierungssystem 10 selbst oder auf einem externen Computer ausgeführt.

In einem ersten Schritt S1 wird ein Latenzmodell und ein Kompatibilitätsmodell bereitgestellt. Das Latenzmodell wird dabei als eine Funktion verstanden, welche die konkrete Kl-Pipeline und das Zielsystem auf einen numerischen Wert, die Latenz, abbildet. Die Latenz bezeichnet eine benötigte Rechenzeit für die Ausführung der KI-Pipeline auf dem Zielsystem unter den gegebenen Hard- und Softwarevoraussetzungen. Mit dem Latenzmodell kann die Latenz von zum Zeitpunkt der Latenzmodell-Erstellung nicht konkret bekannten KI-Pipelines vorhergesagt werden.

Die Kl-Modelle der Kl-Pipelines können als Aneinanderreihungen von Operatoren beschrieben werden. Unter Operatoren sind dabei elementare mathematische Operationen zu verstehen, wie etwa Faltungsoperatoren oder Aktivierungsfunktionen, die bekannterweise für die Spezifizierung von Kl-Modellen herangezogen werden können. Die Operatoren bilden die Grundbausteine von Kl-Modellen und finden in einer breiten Masse von KI-Modellen Anwendung. Durch Auswählen aus der Vielzahl von Operatoren beziehungsweise unterschiedliches Kombinieren der Operatoren lassen sich so zuvor unbekannten KI-Modelle zusammenstellen.

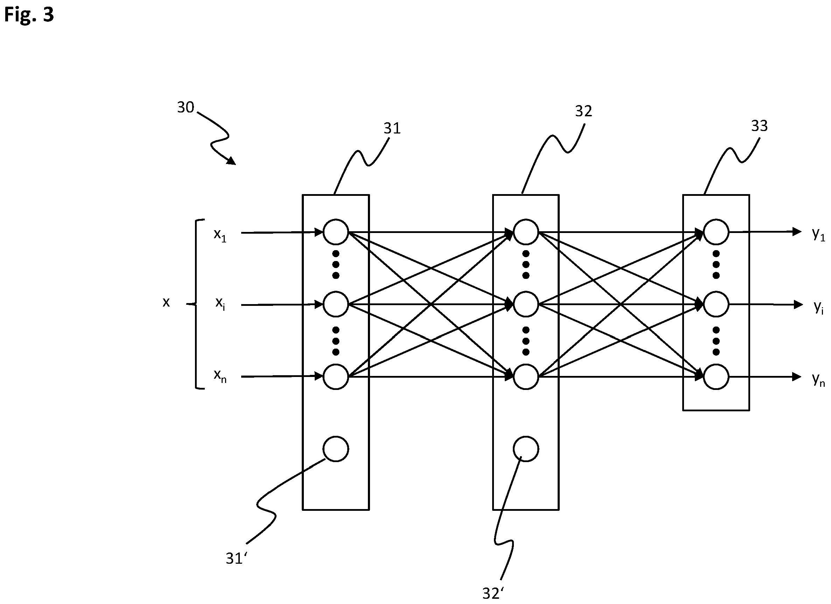

Beispielsweise kann ein künstliches neuronales Netz 30, als eine spezielle Form eines Kl-Modells, wie in Figur 3 schematisch dargestellt aufgebaut sein. In der Darstellung der Figur 3 wird ein Eingabevektor x, der durch die Werte x₁, xᵢ, xₙ repräsentiert ist, in dem neuronalen Netz 30 schematisch von links nach rechts abgearbeitet.

Das in Fig. 3 gezeigte neuronale Netz 30 ist ein MLP (Multilayer Perceptron)-artiges neuronales Netz , das in bekannter Weise aus drei Schichten, einem Input Layer 31, einem Hidden Layer 32, und einem Output Layer 33 besteht. Der Hidden Layer 33 kann sich dabei wiederum aus mehreren Schichten zusammensetzen. Jedes Neuron in einer Schicht ist mit jedem Neuron in der nächsten Schicht verbunden, wobei jede Verbindung einen numerischen Wert hat, der als Gewicht bezeichnet wird. Das MLP-Netz besitzt eine Feedforward-Architektur, bei der Informationen nur in eine Richtung durch das Netzwerk fließen, ohne Rückkopplungsschleifen oder zyklische Verbindungen.

MLP-Netze werden insbesondere in Vorhersageanwendungen verwendet werden. Alternativ können aber beispielsweise auch RBF (radiale Basisfunktion)-artige neuronale Netze eingesetzt werden.

Jeder der drei Schichten, der Input Layer 31, der Hidden Layer 32, und der Output Layer 33 bildet einen Operator, wobei der Input Layer 31 und der Hidden Layer im Beispiel jeweils eine Matrixmultiplikation mit einem ersten Bias 311 und einem zweiten Bias 321 darstellen, und der Output Layer 33 eine Matrixmultiplikation ohne Bias.

Die Laufzeit der Berechnung solcher Operatoren in einem künstlichen neuronalen Netz 30 kann von Zielsystem zu Zielsystem stark variieren, bedingt durch die spezielle Hardware- und Softwarekonfiguration. Daher wird die Laufzeit der jeweiligen Operatoren in Abhängigkeit der im zweitenSchritt S2 erfassten Hardware- und Softwarekonfiguration bestimmt.

Die Latenz der KI-Pipeline wird dann als Summe der Laufzeiten der Operatoren des Kl-Modells sowie zusätzlich der Laufzeiten von Pre- und Post-Processing bestimmt. Dabei besteht die Möglichkeit, Pre- und Post-Processing auch mit Operatoren zu beschreiben und deren Laufzeit dann zu ermitteln.

In dem konkreten Beispiel der Figur 1 wird die Latenz des in Figur 3 gezeigten neuronalen Netzes 30, welches zusammen mit Post- und Pre-Processing die KI-Pipeline 22 definiert, auf dem gegebenen Zielsystem (ZS) bestimmt durch folgende Berechnungsvorschrift: 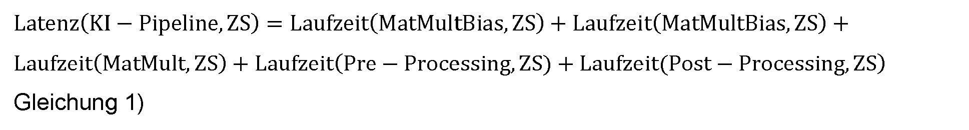 Latenz(KI - Pipeline, ZS) = Laufzeit(MatMultBias, ZS) + Laufzeit(MatMultBias, ZS) + Laufzeit(MatMult, ZS) + Laufzeit(Pre - Processing, ZS) + Laufzeit(Post - Processing, ZS) (Gleichung 1)

Latenz (Kl-Pipeline, ZS) ist hierbei zu lesen als Latenz der betrachteten Kl-Pipeline auf dem betrachteten Zielsystem ZS. Die Abkürzung MatMult steht für die oben beschriebene Operation einer Matrizenmultiplikation, MatMultBias für eine Matrizenmultiplikation mit Bias.

Um die Latenz auf einem Zielsystem bestimmen zu können, werden die Laufzeiten der Operatoren, beispielsweise MatMultBias, zuvor auf einer Mehrzahl unterschiedlicher Zielsysteme gemessen und in einer Datenbank abgelegt.

Die Hardwarekonfiguration eines Zielsystems kann beispielsweise einen bestimmten Typ eines Personal Computers (PC), einen bestimmten in dem PC verwendeten Mikroprozessor, beispielsweise eine Intel Core-i7-CPU, und eine bestimmte Arbeitsspeicherkonfiguration umfassen, etwa 16 GB DDR4 Arbeitsspeicher. Die Softwarekonfiguration eines Zielsystems umfasst einen Versionsstand des auf der SPS 20 ausgeführten Betriebssystems, beispielsweise eine Microsoft Windows-Betriebssystem-Version, einen Versionsstand der auf der SPS 20 ausgeführten Software, beispielsweise eines Basis-TwinCAT-Systems, sowie einen Versionsstand bestimmter durch die SPS 20 ausgeführter Softwarebibliotheken wie beispielsweise eine TwinCAT Vision-Version. Zudem kann eine solche Beschreibung auch die Parametrierung einer bestimmten Ausführweise, beispielsweise mit oder ohne Multithreading, Nutzung eines KI-Beschleunigers etc. beinhalten.

Die nachfolgende Tabelle 1 zeigt zeilenweise beispielhaft die Laufzeiten für die Operatoren MatMultBias und MatMult für ausgewählte Hardware- und Softwarekonfigurationen. Die Hardwarekonfiguration ist im Beispiel SPS-Typ C6030 mit einer CPU Core i7-11850HE. Für die Softwarekonfiguration TwinCAT-Version 3.2.7 ist die Laufzeit für den Operator MatMultBias 0,003s (Zeile 1) und MatMult die Laufzeit für den Operator MatMult 0,002s (Zeile 2). Für die Softwarekonfiguration TwinCAT-Version 3.2.1 ist die Laufzeit für den Operator MatMultBias 0,006s (Zeile 3).

**Tabelle 1**

| Zielsystem | | | | Operator | Laufzeit [in s] |
|---|---|---|---|---|---|
| SPS-Typ | CPU | TwinCAT Version | ... | | |
| C6030 | Core i7-11850HE | 3.2.7 | ... | MatMultBias | 0,003 |
| C6030 | Core i7-11850HE | 3.2.7 | ... | MatMult | 0,002 |
| C6030 | Core i7-11850HE | 3.2.1 | ... | MatMultBias | 0,006 |

Mithilfe einer derart angelegten Datenbank lassen sich die Latenzen von Kl-Modelle nun gemäß der individuellen Operatoren der zugehörigen Kl-Modelle unter Berücksichtigung des Zielsystems berechnen. Für Operatoren, die für das gegebene Zielsystem nicht in der Datenbank enthalten sind, lassen sich Laufzeiten aufgrund von Ähnlichkeiten bestimmter Attribute interpolieren.

Auch die Laufzeiten von Pre-Processing bzw. Post-Processing, wenn diese mit Operatoren beschreiben werden können, lassen sich so ermitteln.

Darüber hinaus kann ein Latenzmodell auch Kontextualisierungen von Operatorabfolgen berücksichtigen, etwas das ein Zielsystem das Hintereinander-Ausführen von zwei MatMult-Operationen zusammenfassen und dadurch besonders effizient ausführen kann. Somit lassen sich auch komplexere Latenzzusammenhänge im Vergleich zu einer Aufsummierung nur von Operatoren (vgl. Gleichung 1) modellieren.

Statt einer datenbankbasierten Ermittlung, wobei für jeden Operator bzw. jeder Operatorabfolge des Kl-Modells eine zuvor gemessene Laufzeit bestimmt wird, die dann zur Latenz akkumuliert wird, können jedoch auch (erlernte) Kl-Modelle (etwa neuronale Netze) bei der Latenzmodell-Bestimmung zum Einsatz kommen. Auch hier können die Kl-Modelle komplexere Latenzabhängigkeiten zwischen Sequenzen von Operatoren abbilden, sodass wie im zuvor genannten Beispiel zwei MatMult-Operatoren durch einen Kl-Beschleuniger zusammengefasst werden können, und die resultierende Latenz auf dem gewählten Zielsystem dann insgesamt kleiner ist als die Summe der beiden individuellen Latenzen.

Mit dem Latenzmodell kann so für jede KI-Pipeline zur Durchführung einer Automatisierungsaufgabe in dem Automatisierungssystem die erwartbare Latenz unter Berücksichtigung der Software- und Hardwarekonfiguration des Zielsystems vorhergesagt werden.

Wie oben bereits erwähnt, wird im ersten Schritt S1 auch ein Kompatibilitätsmodell des Automatisierungssystems bereitgestellt. Dies ist vorteilhaft, da bekannte Kl-Modelle oftmals Operatoren verwenden, die nicht notwendigerweise auf jedem Zielsystem unterstützt werden. Beispielsweise werden neueste KI-Operatoren wie das Transponieren einer Matrix in Softwareplattformen wie neueren Automatisierungssoftware-Versionen erst mit etwas Zeitverzug unterstützt, sodass ein Kl-Modell, das solch einen Operator nutzt, auf bestimmten Zielsystemen schlicht nicht ausführbar wäre, unabhängig von Gesichtspunkten wie Laufzeit des Operators oder Latenz der Kl-Pipeline. Dies gilt entsprechend auch für das Pre-Processing bzw. Post-Processing, wenn diese mit Operatoren beschreiben werden.

Um zu vermeiden, dass ein Kl-Modell bzw. eine Kl-Pipeline ausgewählt wird, die in diesem Sinne nicht erfüllbare Anforderungen an das Zielsystem stellen, wird mit dem Kompatibilitätsmodell sichergestellt, dass keine Kandidaten für das Kl-Modell bzw. die KI-Pipeline generiert werden, die auf dem konkreten Zielsystem nicht ausführbar sind. Das Kompatibilitätsmodell ist dabei ein regelbasiertes Modell, welches Funktionen des Kl-Modells bzw. der Kl-Pipeline auf funktional äquivalente Funktionen des Zielsystems abbildet. Auch hier lassen sich potenziell Kontextualisierung von Operatorsequenzen betrachten, etwa dass eine einzelne Funktion einer Kl-Pipeline kein Äquivalent zu einer Funktion des Zielsystems hat, wohl aber wenn es mit einem anderen Operator sequenziell kombiniert wird.

Dies kann als eine Art Datenbank verstanden werden, deren Aufbau beispielhaft in der nachfolgenden Tabelle 2 angedeutet ist. Die Tabelle 2 zeigt zeilenweise für die Operatoren MatMultBias, MatMult und imageResize (Veränderung einer Bildgröße) für die Hardware- und Softwarekonfiguration des Zielsystems die entsprechende äquivalente Funktion. Die Hardwarekonfiguration der Zielsysteme ist im Beispiel SPS-Typ C6030 mit einer CPU Core i7-11850HE. Als Softwarekonfiguration der Zielsysteme ist dabei mindestens TwinCAT-Version 3.2 bzw. mindestens TwinCAT-Version 3.2.1. vorgesehen. Dem Operator MatMultBias ist als Zielfunktion TwinCAT MatMultBias (Zeile 1), dem Operator MatMult ist als Zielfunktion TwinCAT MatMult (Zeile 2)und dem Operator imageResize ist als Zielfunktion TwinCAT imageResize (Zeile 3) zugeordnet.

**Tabelle 2**

| Zielsystem | | | | Operator | Zielfunktion |
|---|---|---|---|---|---|
| SPS-Typ | CPU | TwinCAT Version | ... | | |
| C6030 | Core i7-11850HE | >= 3.2 | ... | MatMultBias | TwinCAT MatMultBias |
| C6030 | Core i7-11850HE | >= 3.2 | ... | MatMult | TwinCAT MatMult |
| C6030 | Core i7-11850HE | >= 3.2.1 | ... | ImageResize | TwinCAT Vision Resize |

Falls ein Operator auf einem Zielsystem keine korrespondierende Zielfunktion hat, kann das entsprechende Feld beispielsweise leer bleiben oder den Eintrag nicht vorhanden enthalten.

Mit dem Kompatibilitätsmodell als einem regelbasierten Modell, das für ein Kl-Modell bzw. eine Kl-Pipeline und eine Beschreibung des Zielsystems prüft, ob das Kl-Modell auf dem Zielsystem ausführbar bzw. operabel ist, kann die Kompatibilität zwischen KI-Modell und Zielsystem festgestellt werden. Mit dem Kompatibilitätsmodell wird beispielsweise überprüft, ob die Software-Bibliotheken im Zielsystem, z. B. TwinCAT-Vision für eine Echtzeitausführung bestimmte Operatoren unterstützen.

Statt einer datenbankbasierten Ermittlung können jedoch auch (erlernte) Kl-Modelle (etwa neuronale Netze oder Large Language Modelle) bei der Kompatibilitätsmodell-Bestimmung zum Einsatz kommen.

In einem zweiten Schritt S2 des Verfahren zur Erzeugung eines Steuerprogramms der SPS 20, das schematisch in Figur 2 dargestellt ist, werden dann die konkrete Hardwarekonfiguration bzw. Softwarekonfiguration des Automatisierungssystems 10 erfasst. Dies kann softwaremäßig automatisiert oder über eine Benutzerschnittstelle (engl. Human-Machine-Interface, HMI) und Interaktion mit einem Benutzer geschehen.

Auf Grundlage der erfassten Hardwarekonfiguration bzw. Softwarekonfiguration wird dann mithilfe des Kompatibilitätsmodells in einem dritten Schritt S3 ein Set von geeigneten Kl-Pipeline-Modellen erstellt. Zu diesem Zweck wird eine Vielzahl verschiedener KI-Pipelines generiert, die als Lösungskandidaten infrage kommen. Dabei werden verschiedene kombinatorische Möglichkeiten von Sequenzen von Operatoren erzeugt, wobei nur solche Operatoren verwendet werden, die nach dem Kompatibilitätsmodell mit der erfassten Hardwarekonfiguration bzw. Softwarekonfiguration des Zielsystems kompatibel sind.

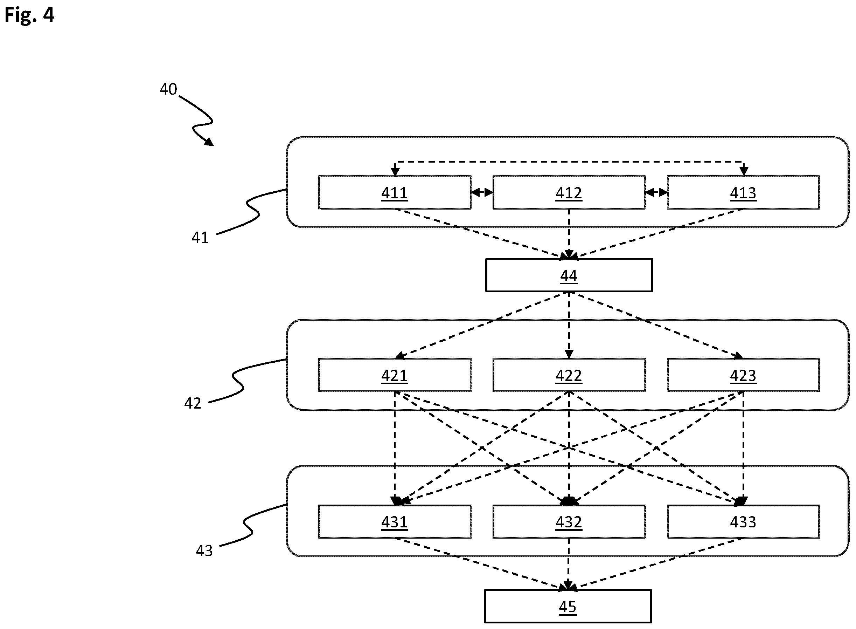

Dieser Vorgang kann, wie in Figur 4 schematisch gezeigt, als Suchgraph 40 dargestellt werden, dessen Operatoren über verschiedene, als gestrichelte Pfeile dargestellte Pfadoptionen verbunden sind. Der in Figur 4 gezeigte Suchgraph 40 nimmt dabei Bezug auf das in Figur 1 gezeigte Automatisierungssystem 10, das ein Teil einer Verpackungsmaschine ist.

In einem ersten Layer 41 des Suchgraphs 40 sind dabei Schritte des Pre-Processing enthalten. In Bezug auf ein von der Sensorvorrichtung 4 übermitteltes Bild einer Verpackungseinheit 2 kann dies wie oben bereits angedeutet beispielsweise eine Anpassung einer Bildgröße 411 (Resize), sowie ein Anheben 412 oder ein Absenken 413 eines Bildsättigungswertes sein. Zwischen einer Modelleingabe 44, welche die Eingabe des Inputvektors des Kl-Modells umfasst, und einer Modellausgabe 45 (dem Output) sind ein zweiter Layer 42 und ein dritter Layer 43 angeordnet. Diese enthalten jeweils verschiedene Operatoren, die für die Ausführung der zu lösenden Aufgabe, beispielsweise der Klassifizierungsaufgabe des Automatisierungssystems in Figur 1, benötigt werden, etwa Matrixmultiplikation 421, 431, Matrixmultiplikation mit Bias 422, 432, und Identitätsoperator 423, 433.

In Figur 4 nicht gezeigt, kann der Suchgraph 40 weitere Operatoren und Layer, beispielsweise einen Layer, der Schritte des Post-Processing beinhaltet, umfassen. Ein konkreter Pfad durch den Suchgraph 40 ergibt eine Kl-Pipeline, die gemäß dem Kompatibilitätsmodell einen mit dem Zielsystem kompatiblen möglichen KI-Pipeline-Kandidaten darstellt.

Um sicherzustellen, dass mögliche Kl-Pipeline-Kandidaten geeignete KI-Pipeline-Kandidaten sind, werden die Kl-Modelle der möglichen KI-Pipeline-Kandidaten mit einem aufgabenspezifischen Trainingsdatensatz angelernt / trainiert, um anschließend auf einem zuvor vom Trainingsdatensatz separierten Validierungsdatensatz evaluiert zu werden.

Im Beispiel der Figur 1 kann ein Trainingsdatensatz für eine visuelle Inspektion beispielsweise Bilder von Verpackungen 2 umfassen, mit einer Annotation (labels), welche die abgebildeten Verpackungen 2 im Sinne einer Grundwahrheit (Ground Truth) als einer der Kategorien OK und nicht OK zugehörig ausweisen.

Die geeigneten Kl-Modelle selbst werden wiederum mithilfe eines Kl-Algorithmus bestimmt, beispielsweise eines graphischen neuronalen Netzwerkmodells. Die Erstellung von Kandidaten für Kl-Modelle, die dann im Rahmen der KI-Pipeline-Kandidaten berücksichtigt werden, kann mithilfe von Bibliotheken erfolgen. Bei der Generierung der KI-Pipeline-Kandidaten werden dabei nicht nur verschiedene Kl-Modelle berücksichtigt, sondern auch die (datensatzspezifischen) Vor- und Nachbereitungsschritte des Prebeziehungsweise Post-Processing.

Während grundsätzlich beliebige Kl-Modelle und/oder Kl-Pipelines als Kandidaten generiert werden könnten, kann die Generierung auf eine one-shot neural architecture search (vergleiche beispielsweise Zichao Guo et. al: Single Path One-Shot Neural Architecture Search with Uniform Sampling, in https://arxiv.org/abs/1904.00420) beschränkt sein. Dazu lässt sich ein Suchraum in Form eines gerichteten azyklischen Graphen (engl. directed acylic graph, DAG) auswählen, der nur Operatoren enthält, die kompatibel mit dem Zielsystem sind. Dann werden in einem Training in jeder Trainingsiteration, die einer konkreten Anpassung des Modells basierend auf den Trainingsdaten entspricht, Pfade in dem DAG gesampled, die dann mittels Backpropagation unter Zuhilfenahme klassischer Kostenfunktionen optimiert werden. Dabei kann ein Teil der beim Sampling ausgewählten Blöcke in mehreren Kandidaten auftauchen, sodass deren Optimierung implizit auch Einflüsse auf die Optimierung anderer Kandidaten hat. Demzufolge werden optimierte Parameter bzw. Gewichtungen des Modells (engl. weights) geteilt, was zu einem sogenannten weight sharing führt. Für das Training wird ein aufgabenspezifischer Datensatz oder eine Kombination solcherherangezogen. Nach Beendigung dieses ersten Trainings stellt dann der gesamte optimierte Suchraum in Form des DAGs, in dem jeder Pfad ein konkretes neuronales Netz darstellt, die Menge an Kandidaten dar, die kompatibel zum Zielsystem sind.

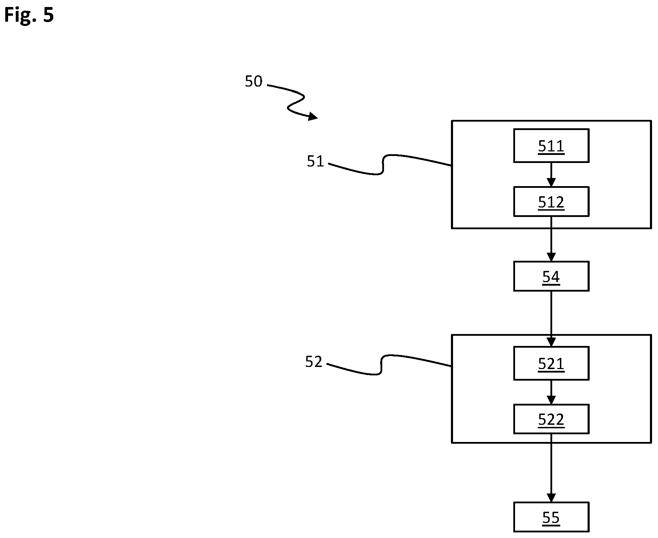

Figur 5 zeigt exemplarisch einen generierten Kl-Pipeline-Kandidaten 50, der mithilfe des in Figur 4 gezeigten Suchgraphen 40 und unter Verwendung eines graphischen neuronalen Netzes gefunden wurde. Ein Pre-Processing-Layer 51 enthält die Operatoren Anpassung der Bildgröße 511 (Resize) sowie Anheben des Bildsättigungswertes 512. Die Modelleingabe 54 entspricht wie im Zusammenhang mit Figur 4 beschrieben der Eingabe des Inputvektors des Kl-Modells. Das Kl-Modell 52 selbst enthält den ersten Operator 521 der Matrixmultiplikation mit Bias und den zweiten Operator 522 der Matrixmultiplikation ohne Bias. Ferner umfasst der Kl-Pipeline-Kandidat 22 eine Modellausgabe 55. Hier nicht gezeigt ist eine eventuelle Nachverarbeitungsschicht, die sich unmittelbar an die Modellausgabe 55 anschließen würde.

Mit der KI-Pipeline-Kandidaten-Generierung werden eine Mehrzahl von verschiedenen Kl-Pipelines ermittelt, die als Lösungskandidaten infrage kommen, wobei bereits ein übergreifendes Training aller potenziellen Modellkandidaten durchlaufen wurde. Durch das Kompatibilitätsmodell wird sichergestellt, dass nur Kl-Pipeline-Kandidaten generiert werden, die grundsätzlich auf dem ausgewählten Zielsystem lauffähig sind.

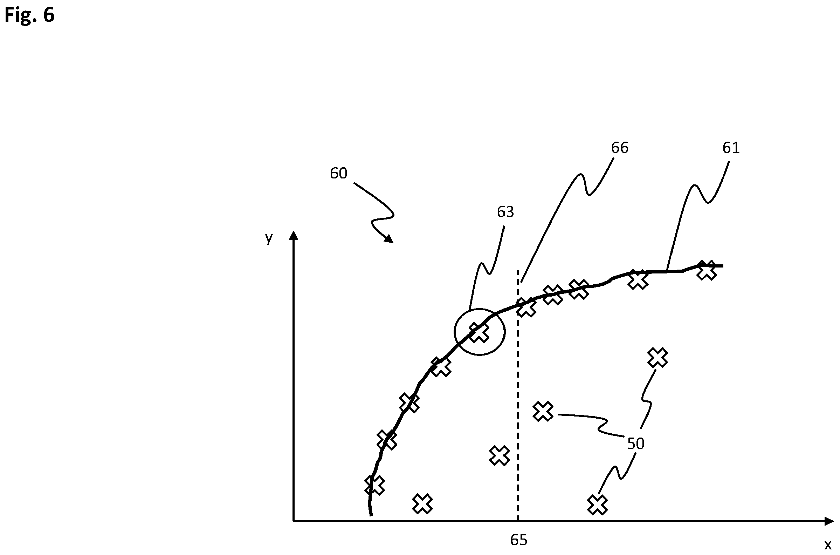

In einem vierten Schritt S4 wird aus dem Set der geeigneten Kl-Pipeline-Kandidaten nun eine KI-Pipeline zur Verwendung in dem Steuerprogramm der SPS 20 ausgewählt, was im Folgenden unter Bezugnahme auf Figur 6 beschrieben wird.

Die Kl-Modelle der KI-Pipeline-Kandidaten werden dabei anhand von weiteren, insbesondere umfangreichen aufgabenspezifischen Trainingsdatensätzen trainiert. Das Training wird in an sich im technischen Feld der KI bekannterweise durch geeignete Feedback-Schleifen und -algorithmen, unter Verwendung von beispielsweise Residuen und Kostenfunktionen, durchgeführt. Durch das Trainieren der Kl-Modelle kann ihre Generalisierungsfähigkeit verbessert werden. Ihre Latenz bleibt dabei unverändert, da nur noch Gewichte (engl. weights) des Modells verändert werden, jedoch nicht die Modell-Architektur.

Jeder Kl-Pipeline-Kandidat 50, im Diagramm 60 der Figur 6 als Kreuz repräsentiert, weist eine Latenz auf, das heißt eine resultierende benötigte Rechenzeit für die Ausführung der KI-Pipeline auf dem Zielsystem unter den gegebenen Hard- und Softwarevoraussetzungen. Die Latenz ist im Diagramm 60 auf der Abszisse (x) aufgetragen. Wie bereits weiter oben beschrieben, kann diese Latenz rechnerisch als Summe der Laufzeiten der einzelnen Operatoren, die in der KI-Pipeline verwendet werden, mithilfe des Latenzmodells bestimmt werden.

Jeder der Kl-Pipeline-Kandidaten 50 weist außerdem eine Generalisierungsfähigkeit auf, die im Diagramm 60 auf der Ordinate (y) aufgetragen ist. Allgemein ausgedrückt kann unter der Generalisierungsfähigkeit die Fähigkeit eines Kl-Modells verstanden werden, akkurate (also möglichst der Grundwahrheit entsprechende) Prädiktionen auf zuvor ungesehenen Daten zu machen. Wenn also ein KI-Pipeline-Kandidat 50 auf Trainingsdaten trainiert wird, soll dieses Modell auch möglichst fehlerfrei in einer Anwendung auf neu generierten, zuvor ungesehenen Daten funktionieren, indem es grundlegende Konzepte erlernt hat, die generalisierend auf neue Daten angewandt werden können und die zugrundeliegenden Relationen zwischen Merkmalen (im Beispiel Verpackungseinheiten 2) und Labels (im Beispiel OK oder nicht OK) wiedergeben. Die Generalisierungsfähigkeit kann in Bezug auf das Diagramm auch als Genauigkeit der durch den jeweiligen Kl-Pipelinekandidaten 50 gemachten Prädiktionen, ob Verpackungseinheiten 2 OK oder nicht OK sind, interpretiert werden. Entsprechende Metriken für die Generalisierungsfähigkeit sind im Stand der Technik bekannt.

Die horizontale und vertikale Position der einzelnen Kl-Pipeline-Kandidaten im Diagramm 60 reflektiert also jeweils deren Performance hinsichtlich ihrer Latenz (je weiter links im Diagramm, desto besser, da kleinere Latenz) und ihrer Generalisierungsfähigkeit (je weiter oben im Diagramm, desto besser, da größere Generalisierungsfähigkeit).

Zur Auswertung der Latenz der einzelnen Kl-Pipeline-Kandidaten wird eine aus den Echtzeit-Randbedingungen des Automatisierungssystems 10 resultierende Latenzanforderung, im Diagramm 60 durch einen Wert 65 und eine korrespondierende gestrichelte vertikale Linie 66 dargestellt, mit den in dem Latenzmodell enthaltenen erwartbaren Latenzen aller betrachteten KI-Pipeline-Kandidaten verglichen.

Die Latenzanforderung 65 an die auszuwählende KI-Pipeline 22 im Sinne eines maximal zur Erzeugung einer Prädiktion zur Verfügung stehenden Zeitraums entspricht im Beispiel der Figur 1 der maximal zulässigen Entscheidungszeitdauer ΔT2 von 150ms, reduziert um eine Zeitdauer für andere Prozesse, die in diesem Zeitraum ebenfalls ablaufen müssen, beispielsweise Zustandsprüfungen der Ausschleus-Station 5, Ansteuerung des Förderbands 1, und Ähnliches. Für diese Aufgaben werden in diesem Beispiel 50ms Rechenzeit angenommen, sodass die Latenzanforderung an die KI-Pipeline 22 100ms beträgt (150ms-50ms = 100ms).

Alle Kl-Pipeline-Kandidaten, die eine höhere Latenz als die Latenzanforderung 65 haben, also im Diagramm 60 rechts der gestrichelten vertikalen Linie 66 dargestellt sind, werden im vierten Schritt S4 verworfen und nicht für eine Verwendung in dem Steuerprogramm der SPS 20 in Betracht gezogen. Aus den verbleibenden KI-Pipeline-Kandidaten können zunächst sogenannte Pareto-optimale Kandidaten gesucht werden. Als Pareto-optimal wird in diesem Zusammenhang ein Kandidat bezeichnet, der hinsichtlich seiner Eigenschaften der Generalisierungsfähigkeit und Latenz von keinem anderen Kandidaten im Sinne einer gleichzeitigen Verbesserung der Generalisierungsfähigkeit und Latenz übertroffen wird, der also beide Qualitätsmerkmale gleichzeitig verbessern würde.

Die Menge der Pareto-optimalen Kandidaten ist entlang der im Diagramm 60 dargestellten Pareto-Front 61 angeordnet. Von dieser Menge an Kl-Pipeline-Kandidaten wird dann als KI-Pipeline 22 für eine Verwendung in dem Steuerprogramm der SPS 20 in der Regel diejenige ausgewählt, welche die höchste Generalisierungsfähigkeit bei einer Latenz kleiner als die Latenzanforderung 65 aufweist. Im Diagramm 60 ist dieser KI-Pipeline-Kandidat durch das eingekreiste Kreuz 63 gekennzeichnet.

Das Auswählen der KI-Pipeline 22 aus dem Set an KI-Pipeline-Kandidaten im vierten Schritt S4 kann alternativ auch durch einen Benutzer erfolgen. Dies kann beispielsweise derart geschehen, dass dem Benutzer während der Durchführung des Verfahrens auf einer HMI bestimmte Metriken und Details der Kl-Pipeline-Kandidaten zur Kenntnis gebracht werden, beispielsweise die Latenzen der Kl-Pipeline-Kandidaten, eine Metrik für ihre Generalisierungsfähigkeit, den Typen des je Kl-Pipeline-Kandidaten verwendeten Kl-Modells, dessen Energieeffizienz, und/oder die verwendeten Software-bibliotheken. Der Benutzer hat dann die Gelegenheit, händisch über die HMI-Schnittstelle bestimmte Gewichtungen im Auswahlalgorithmus zu setzen oder einen KI-Pipeline-Kandidaten selbst auszuwählen.

In Konfigurationen des Zielsystems, in denen im vierten Schritt S4 bei der Kandidatenselektion kein Kl-Pipeline-Modell gefunden wird, welches die Latenzanforderung erfüllt, wird in einem fünften Schritt S5 die Hardware- und/oder die Software-Spezifikation des Zielsystems angepasst. Dabei kann einem Benutzer ein Vorschlag zu dieser Anpassung auf Grundlage einer Datenbank, in welcher verschiedene Hardware- und/oder Software-Spezifikationen mit entsprechenden Leistungsdaten hinterlegt sind, gemacht werden.

Wird beispielsweise im vierten Schritt S4 festgestellt, dass die im dritten Schritt S3 erstellten Kl-Pipeline-Kandidaten sehr komplex sind und ihre Ausführung daher auf einer gegebenen CPU zu langsam ist, kann im fünften Schritt S5 zum Beispiel auf einen Computer mit schnellerem Prozessor und schnellerer Graphikkarte als Hardware, und auf eine leistungsfähigere Softwarebibliothek gewechselt werden.

Daher wird in diesem Fall, wie in Figur 2 angedeutet, nach Durchführen der Änderungen an der Hardware- und/oder Softwarekonfiguration das Verfahren in einer Schleife von ab dem zweiten Schritt S2 ausgehend erneut durchlaufen, indem die geänderte Hardware- und Softwarekonfiguration im zweiten Schritt S2 erfasst, auf Grundlage des Kompatibilitätsmodells im dritten Schritt S3 ein Set von geeigneten Kl-Pipeline-Modellen erstellt und im vierten Schritt S4 aus dem Set der geeigneten KI-Pipeline-Kandidaten eine Kl-Pipeline zur Verwendung in dem Steuerprogramm der SPS 20 ausgewählt wird.

Ferner kann die im vierten Schritt S4 ausgewählte Kl-Pipeline 22 in einem sechsten Schritt S6 anhand von anwendungsspezifischen Datensätzen nachtrainiert werden, um die Generalisierungsfähigkeit zu verbessern. Auch hier bleibt die Latenz unverändert. Der Hintergrund für diesen Schritt ist der, dass die im vierten Schritt S4 ausgewählte Kl-Pipeline 22 während der gemeinsamen Optimierung noch nicht oft genug während des Trainings gesampelt worden sein kann, sodass noch Optimierungspotenzial in Bezug auf die Generalisierungsfähigkeit der KI-Pipeline 22 besteht.

In einem siebten Schritt S7 wird ein Quellcode des Steuerprogramms der SPS 20 des Automatisierungssystems 10 erstellt, unter Verwendung der im vierten Schritt S4 ausgewählten KI-Pipeline 22. Dabei wird die KI-Pipeline 22 aus der KI-Trainingsumgebung in Zielsystem-kompatiblen SPS-Quellcode exportiert und gespeichert. Der SPS-Quellcode wird in die SPS-Umgebung der SPS 20 integriert.

Dabei wird der SPS-Quellcode so erzeugt, dass Operatoren zur Kl-Pipeline-Ausführung, etwa Vorverarbeitungsschritte, auf Software-spezifische Bibliotheksfunktionen, etwa TwinCAT-Bibliothek-Funktionen, abgebildet werden, was einen Schritt darstellt, dessen Durchführbarkeit durch das Kompatibilitätsmodell garantiert ist. Das Steuerprogramm der SPS 20 gewährleistet derart mit ihrer deterministischen zyklischen Ausführung, dass Berechnungsergebnisse zum erwarteten Zeitpunkt vorliegen.

Der im siebten Schritt S7 generierte SPS-Code wird während des Betriebs des Automatisierungssystems 10 auf der SPS 20 ausgeführt, sodass diese die mithilfe der Kl-Pipeline 22 zu lösende Aufgabe, im Beispiel die Klassifizierung der Verpackungseinheiten 2, zuverlässig innerhalb der vorgegebenen maximalen Latenz prädizieren kann.

Das vorgestellte Verfahren ist in der Lage, dass auch die Vor- und Nachverarbeitungsschritte optimiert werden. Dabei ermöglicht es das Kompatibilitätsmodell, dass derart optimierte Operatoren auch auf konkrete Softwarefunktionen gemappt werden können, wodurch dann auch im siebten Schritt S7 der SPS-Code automatisiert generiert werden kann.

Ferner lassen sich unter Verwendung des Latenzmodells, wie vorstehend bereits erläutert, Details der Ausführungsumgebung (etwa eine ONNX-Runtime (Open Neural Network Exchange) und deren Konfiguration, eine TwinCAT-Version, ein Betriebssystem, etc.) berücksichtigen, da der im siebten Schritt S7 generierte SPS-Code dem Anwender mit einer konkreten Softwarekonfiguration, die sich letztendlich als ein Image für das Zielsystem ausliefern lässt, bereitgestellt werden kann. Implizit wird dadurch auch eine Optimierung einer Ausführungsumgebung inklusive einer Software-Spezifikationen für ein gegebenes Modell ermöglicht.

Durch die Verwendung des Latenzmodells wird stets die Echtzeitfähigkeit des generierten Steuerprogramms garantiert. Das Kompatibilitätsmodell, das sowohl Hard- als auch Softwarespezifikationen des Zielsystems berücksichtigt, stellt ferner die Operabilität sicher. Die Operabilität ist daher inhärent garantiert, und eine Situation, in welcher der im fünften Schritt S5 erstellte Quellcode des Steuerprogramms der SPS in der ausgewählten Konfiguration des Zielsystems aufgrund von Hardware-Inkompatibilität nicht ausführbar ist, kann ausgeschlossen werden.

Die Erfindung ist nicht auf die beschriebenen und dargestellten Ausführungsbeispiele beschränkt. Sie umfasst vielmehr auch alle fachmännischen Weiterbildungen im Rahmen der durch die Patentansprüche definierten Erfindung. Neben den beschriebenen und abgebildeten Ausführungsformen sind weitere Ausführungsformen vorstellbar, welche weitere Abwandlungen sowie Kombinationen von Merkmalen umfassen können.

### Bezugzeichen

- ΔT1: Erste Zeitdauer
- ΔT2: Entscheidungszeitdauer
- 1: Förderband
- 2: Verpackungseinheit
- 3: Pfeil
- 4: Sensorvorrichtung
- 5: Ausschleusestation
- 10: Automatisierungssystem
- 20: Speicherprogrammierbare Steuerung (SPS)
- 21: Schnittstelle
- 22: KI-Pipeline
- 23: Pre-Processing
- 24: Kl-Modell
- 25: Post-Processing
- 30: Neuronales Netz
- 31: Input Layer;
- 311: erster Bias
- 32: Hidden Layer;
- 321: zweiter Bias
- 33: Output Layer
- 40: Suchgraph
- 41: Pre-Processing
- 42: Entscheidungsblock 1
- 43: Entscheidungsblock 2
- 44: Modelleingabe
- 45: Modellausgabe
- 50: KI-Pipeline-Kandidat
- 51: Pre-Processing-Layer
- 52: Kl-Modell
- 54: Modelleingabe
- 55: Modellausgabe
- 60: Diagramm
- 61: Pareto-Front
- 65: Latenzanforderung
- 67: Gestrichelte vertikale Linie
- S1: Erster Schritt
- S2: Zweiter Schritt
- S3: Dritter Schritt
- S4: Vierter Schritt
- S5: Fünfter Schritt
- S6: Sechster Schritt
- S7: Siebter Schritt

## Patentansprüche

1. Verfahren zur Erzeugung eines Steuerprogramms einer speicherprogrammierbaren Steuerung (20) in einem Automatisierungssystem (10) auf der Grundlage einer KI-Pipeline, die wenigstens ein Kl-Modell mit optional einer Vorverarbeitung von Eingangsdaten und/oder einer Nachverarbeitung von Ausgabedaten enthält, umfassend:
Bereitstellen eines Latenzmodells zum Vorhersagen einer Rechenzeit für eine Ausführung einer Kl-Pipeline auf der Grundlage von Hardwarekonfigurationen und Softwarekonfigurationen und eines Kompatibilitätsmodells zum Abbilden von Kl-Pipeline-Funktionen auf Softwarekonfigurationen;
Erfassen einer Hardwarekonfiguration und einer Softwarekonfiguration der speicherprogrammierbaren Steuerung (20); Erstellen eines Sets an KI-Pipeline-Kandidaten (50) auf der Grundlage des Kompatibilitätsmodells;
Auswählen einer Kl-Pipeline (22) aus dem Set an Kl-Pipeline-Kandidaten (50) durch Auswerten einer Performance der Kl-Pipeline-Kandidaten nach einem Trainieren der KI-Pipeline-Kandidaten unter Berücksichtigung einer Vorhersage einer Rechenzeit auf der Grundlage des Latenzmodells, wobei das Latenzmodell für die KI-Pipeline-Kandidaten (50) jeweils eine Rechenzeit in Form eines numerischen Wertes bestimmt, der sich aus einer Summe von Laufzeiten der ausgeführten Kl-Pipeline-Funktionen der Kl-Pipeline-Kandidaten (50) ergibt, und wobei die Kl-Pipeline-Funktionen jeweils als Operatoren ausgebildet sind, und wobei die Operatoren als elementare mathematische Operatoren ausgebildet sind und Grundbausteine von Kl-Modellen bilden; und
Erstellen eines Quellcodes des Steuerprogramms mit der ausgewählte KI-Pipeline (22) zur Ausführung auf der speicherprogrammierbaren Steuerung (20) in dem Automatisierungssystem (10).

2. Verfahren gemäß Anspruch 1, wobei das Kompatibilitätsmodell eine Datenstruktur erstellt, in der Kl-Pipeline-Funktionen äquivalente Funktionen in der Softwarekonfiguration zuordnet sind.

3. Verfahren gemäß einem der Ansprüche 1 bis 2, wobei das Erstellen des Sets an Kl-Pipeline-Kandidaten (50) mithilfe wenigstens eines anwendungsspezifischen Trainingsdatensatzes erfolgt.

4. Verfahren gemäß Anspruch 3, wobei zum Erstellen und Trainieren des Sets an Kl-Pipeline-Kandidaten (50) ein One-shot neural architecture search-Verfahren verwendet wird.

5. Verfahren gemäß einem der Ansprüche 1 bis 4, wobei beim Auswählen der Kl-Pipeline (22) aus dem Set an Kl-Pipeline-Kandidaten (50) eine Generalisierungsfähigkeit der KI-Pipeline berücksichtigt wird.

6. Verfahren gemäß Anspruch 5, wobei zum Auswählen der KI-Pipeline (22) aus dem Set an Kl-Pipeline-Kandidaten (50) deren Pareto-Optimalität berücksichtigt wird.

7. Verfahren gemäß einem der Ansprüche 1 bis 6, wobei beim Auswählen der Kl-Pipeline (22) mit einem Trainingsdatensatz nachtrainiert wird, um die Generalisierungsfähigkeit zu verbessern.

8. Verfahren gemäß einem der Ansprüche 1 bis 7, wobei, wenn beim Auswählen der KI-Pipeline (22) aus dem Set an Kl-Pipeline-Kandidaten (50) kein Pipelinekandidat eine vorgegebene Latenzanforderung erfüllt, eine Anpassung der Hardwarekonfiguration und/ oder der Software-Konfiguration ausgeführt wird.

9. Verfahren gemäß einem der Ansprüche 1 bis 8, wobei KI-Modelle für die Kl-Pipeline-Kandidaten (50) ausgewählt werden aus der Gruppe der neuronalen Netze, der statistischen Modelle, der Support Vector Machines, der Decision Trees, und/oder der Random Forests.

10. Verfahren zum Betreiben eines Automatisierungssystems (10), umfassend die Schritte:
Erzeugung eines Steuerprogramms einer speicherprogrammierbaren Steuerung (20) des Automatisierungssystems mit dem Verfahren gemäß einem der Ansprüche 1 bis 9, Aufspielen des Quellcodes des Steuerprogramms auf die speicherprogrammierbare Steuerung (20),
Ausführen des Steuerprogramms zum Ausführen einer Automatisierungsaufgabe.

11. Automatisierungssystem (10) zur Ausführung einer Automatisierungsaufgabe, das mit dem Verfahren gemäß Anspruch 10 betrieben wird.

## Claims

1. A method for generating a control program of a programmable logic controller (20) in an automation system (10) based on an AI pipeline containing at least one AI model with optional pre-processing of input data and/or post-processing of output data, comprising:
providing a latency model for predicting a computation time for executing an AI pipeline based on hardware configurations and software configurations, and a compatibility model for mapping AI pipeline functions to software configurations;
detecting a hardware configuration and a software configuration of the programmable logic controller (20); generating a set of AI pipeline candidates (50) based on the compatibility model;
selecting an AI pipeline (22) from the set of AI pipeline candidates (50) by evaluating a performance of the AI pipeline candidates after training the AI pipeline candidates, taking into account a prediction of a computation time based on the latency model,
wherein the latency model for the AI pipeline candidates (50) respectively determines a computation time in the form of numerical values which results from a sum of runtimes of the executed AI pipeline functions of the AI pipeline candidates (50), and wherein the AI pipeline functions are each configured as operators, and wherein the operators are configured as elementary mathematical operators and form basic components of AI models; and
generating a source code of the control program with the selected AI pipeline (22) for execution on the programmable logic controller (20) in the automation system (10).

2. The method according to claim 1, wherein the compatibility model generates a data structure in which AI pipeline functions are assigned equivalent functions in the software configuration.

3. The method according to any one of claims 1 to 2, wherein the set of AI pipeline candidates (50) is generated with the aid of at least one application-specific training data set.

4. The method according to claim 3, wherein a one-shot neural architecture search method is used to generate and train the set of AI pipeline candidates (50).

5. The method according to any one of claims 1 to 4, wherein the generalizing capability of the AI pipeline is taken into account when selecting the AI pipeline (22) from the set of AI pipeline candidates (50).

6. The method according to claim 5, wherein the Pareto optimality of the AI pipeline (22) is taken into account when selecting it from the set of AI pipeline candidates (50).

7. The method according to any one of claims 1 to 6, wherein, when selecting the AI pipeline (22) with a training data set, retraining is carried out to improve the generalizing capability.

8. The method according to any one of claims 1 to 7, wherein, if, when selecting the AI pipeline (22) from the set of AI pipeline candidates (50), no pipeline candidate meets a specified latency requirement, an adjustment of the hardware configuration and/or the software configuration is carried out.

9. The method according to any one of claims 1 to 8, wherein AI models for the AI pipeline candidates (50) are selected from the group of neural networks, statistical models, support vector machines, decision trees, and/or random forests.

10. The method for operating an automation system (10), comprising the steps of:
generating a control program for a programmable logic controller (20) of the automation system using the method according to any one of claims 1 to 9,
loading the source code of the control program onto the programmable logic controller (20),
executing the control program to carry an automation task.

11. An automation system (10) for carrying out an automation task, operated using the method according to claim 10.

## Revendications

1. Procédé de génération d'un programme de commande d'un automate programmable industriel (20) dans un système d'automatisation (10) sur la base d'un pipeline d'IA, qui contient au moins un modèle d'IA avec en option un prétraitement de données d'entrée et/ou un post-traitement de données de sortie, comprenant :
fourniture d'un modèle de latence pour prédire un temps de calcul nécessaire à l'exécution d'un pipeline d'IA sur la base de configurations matérielles et de configurations logicielles et d'un modèle de compatibilité pour mapper des fonctions du pipeline d'IA sur des configurations logicielles ;
détection d'une configuration matérielle et d'une configuration logicielle de l'automate programmable industriel (20) ; création d'un ensemble de candidats de pipeline d'IA (50) sur la base du modèle de compatibilité ;
sélection d'un pipeline d'IA (22) parmi l'ensemble de candidats de pipeline d'IA (50) en évaluant une performance des candidats de pipeline d'IA après un entraînement des candidats de pipeline d'IA, en tenant compte d'une prédiction d'un temps de calcul sur la base du modèle de latence, le modèle de latence pour les candidats de pipeline d'IA (50) déterminant chacun un temps de calcul sous la forme d'une valeur numérique, qui résulte d'une somme de temps d'exécution des fonctions du pipeline d'IA exécutées des candidats de pipeline d'IA (50), et les fonctions du pipeline d'IA étant formées chacune comme des opérateurs, et les opérateurs étant formés comme des opérateurs mathématiques élémentaires et formant des éléments de base de modèles d'IA ; et
création d'un code source du programme de commande avec le pipeline d'IA (22) sélectionné pour l'exécution sur l'automate programmable industriel (20) dans le système d'automatisation (10).

2. Procédé selon la revendication 1, le modèle de compatibilité créant une structure de données dans laquelle des fonctions équivalentes dans la configuration logicielle sont associées à des fonctions du pipeline d'IA.

3. Procédé selon l'une des revendications 1 à 2, la création de l'ensemble de candidats de pipeline d'IA (50) étant effectuée au moyen d'au moins un jeu de données d'entraînement spécifique à l'application.

4. Procédé selon la revendication 3, un procédé de recherche d'architecture neuronale en un seul coup étant utilisé pour créer et entraîner l'ensemble de candidats de pipeline d'IA (50).

5. Procédé selon l'une des revendications 1 à 4, une capacité de généralisation du pipeline d'IA étant prise en compte lors de la sélection du pipeline d'IA (22) parmi l'ensemble de candidats de pipeline d'IA (50).

6. Procédé selon la revendication 5, l'optimum de Pareto du pipeline d'IA (22) étant pris en compte pour sa sélection parmi l'ensemble de candidats de pipeline d'IA (50).

7. Procédé selon l'une des revendications 1 à 6, un entraînement ultérieur avec un jeu de données d'entraînement étant effectué lors de la sélection du pipeline d'IA (22) pour améliorer la capacité de généralisation.

8. Procédé selon l'une des revendications 1 à 7, une adaptation de la configuration matérielle et/ou de la configuration logicielle étant exécutée lorsque, lors de la sélection du pipeline d'IA (22) parmi l'ensemble de candidats de pipeline d'IA (50), aucun candidat de pipeline ne satisfait à une exigence de latence prédéfinie.

9. Procédé selon l'une des revendications 1 à 8, des modèles d'IA pour les candidats de pipeline d'IA (50) étant sélectionnés parmi le groupe des réseaux neuronaux, des modèles statistiques, des machines à vecteurs de support, des arbres de décision et/ou des forêts aléatoires.

10. Procédé destiné à faire fonctionner un système d'automatisation (10), comprenant les étapes :
génération d'un programme de commande d'un automate programmable industriel (20) du système d'automatisation avec le procédé selon l'une des revendications 1 à 9,
installation du code source du programme de commande sur l'automate programmable industriel (20),
exécution du programme de commande pour exécuter une tâche d'automatisation.

11. Système d'automatisation (10) pour l'exécution d'une tâche d'automatisation, qui fonctionne avec le procédé selon la revendication 10.
